# EUROPÄISCHE PATENTSCHRIFT

(11) **EP 1 011 905 B1**
(45) Veröffentlichungstag und Bekanntmachung des Hinweises auf die Patenterteilung: **27.03.2002**
(21) Anmeldenummer: 98954134.7
(22) Anmeldetag: 02.09.1998
(51) Int. Cl.: B23C 3/06, B23C 5/20

(54) **SCHNEIDEINSATZ ZUM SCHNEIDEN VON PROFILEN**
CUTTING TIP FOR CUTTING OUT PROFILES
PLAQUETTE DE COUPE POUR DECOUPER DES PROFILS

(30) Priorität: 08.09.1997 DE 19739300
(43) Veröffentlichungstag der Anmeldung: 28.06.2000
(73) Patentinhaber: Widia GmbH, 45145 Essen (DE)
(72) Erfinder: HEINLOTH, Markus, D-92353 Postbauer-Heng (DE); ZASTROZYNSKI, Jürgen, D-40474 Düsseldorf (DE)
(74) Vertreter: Vomberg, Friedhelm, Dipl.-Phys.
(86) Internationale Anmeldenummer: DE9802635
(87) Internationale Veröffentlichungsnummer: WO9912685

(56) Entgegenhaltungen:
- WO-A-94/27768
- WO-A-95/25618
- FR-A- 891 146
- GB-A- 1 113 475

## Beschreibung

Die Erfindung betrifft einen Schneideinsatz zum Schneiden von Profilen, insbesondere zum Fräsen von Profileinstichen in rotierend bewegte Werkstücke wie Kurbelwellen mit einem im wesentlichen kubischen Grundkörper und mindestens zwei nutzbaren Schneidkanten, mit zwei parallel zueinander angeordneten, ebenen und von einem Befestigungsloch durchdrungenen oder mit einer Ausbildung zur Aufnahme eines Klemmarmes versehenen Seitenflächen, zwei Grundflächen, die an ihren gegenüberliegenden Enden jeweils eine durch dem zu schneidenden Profil entsprechend bogenförmig ausgebildete Schneidkanten begrenzte Spanflächen aufweisen und zwei zwischen gegenüberliegenden Schneidkanten liegende Freiflächen.

Bei der Fertigung von Kurbel- oder Nockenwellen muß eine Vielzahl unterschiedlicher Fräsverfahren angewendet werden, wobei die Bewegungsabläufe bei den durchzuführenden Schnittoperationen durch die zum Teil exzentrisch angeordneten Lager- oder Wellenhubzapfen komplex sind. In einem, u.a. in der DE 195 46 196 A1 beschriebenen Verfahren wird ein Werkstück, beispielsweise eine Kurbelwelle mit seinen Enden in rotierend antreibbaren Einspannfuttern so eingespannt, daß sie um ihre Mittellängsachse drehbar ist. Zur Bearbeitung dienen scheibenförmige Hochgeschwindigkeitswerkzeuge, die drehbar auf einem Support gelagert sind, so daß das Werkzeug nachgeführt werden kann.

Um eine Komplettkontur, die aus zwei Unterstichen und einer Zapfenbearbeitung besteht, fertigen zu können, werden unterschiedlich angeordnete Schneidkörper zur Erzeugung eines Unterstiches und der Zerspanung einer zylindrischen Kontur, wie bei der Zapfenbearbeitung eines Kurbelwellenhublagers verwendet. Zur Unterstichfertigung wird der eingangs beschriebene Schneideinsatz verwendet. Die betreffenden Schneideinsätze werden in Werkzeughaltern mittels Spannschrauben befestigt, wobei als Schneideinsatzaufnahme in Fräsern häufig Kassetten verwendet werden, in deren Plattensitz die Schneideinsätze eingelegt und mittels einer Spannschraube fixiert werden.

Weitere Anwendungsbereiche der eingangs genannten Schneideinsätze sind das Kopierdrehen.

Bei Schneideinsätzen der eingangs genannten Art ergeben sich besondere Schwierigkeiten, wenn durch Optimierung der radialen und/oder axialen Einbaulage kein ausreichender Freiwinkel mehr gegeben ist. Eine Freiwinkelvergrößerung durch Minimierung des Keilwinkels geht zu Lasten der Schneidkantenstabilität. Ein hierdurch drohender frühzeitiger Schneidkantenbruch minimiert die Werkzeugstandzeiten. Bedingt durch die zu schneidenden Profile werden zudem auf den Schneideinsatz in unterschiedlichen Richtungen Schnittkräfte ausgeübt, welche die gewünschte stabile Fixierung des Schneideinsatzes im Plattensitz erschweren.

Es ist daher Aufgabe der vorliegenden Erfindung, einen Schneideinsatz der eingangs genannten Art zu schaffen, der eine flexible Einbaulage mit optimaler Kippung des Schneideinsatzes gewährleistet, bei dem die Einstich-Zerspanungsoperation besser als bei nach dem Stand der Technik bekannten Schneideinsätzen freigestellt ist.

Diese Aufgabe wird mit dem Schneideinsatz mit den Merkmalen nach Anspruch 1 gelöst. Die Freifläche ist zumindest teilweise kreisförmig konkav ausgebildet. Die konkave Freiflächenausbildung bewirkt eine Freiwinkelvergrößerung und schafft zur Freiflächenmitte hin einen großen Freiraum, d.h. Abstand zum zu zerspanenden Werkstück, der vorzugsweise 0,3 bis 1 mm sein sollte, der gewünschte Kippungen des Schneideinsatzes relativ zum Werkstück erlaubt. Ferner weist die Schneidkante (10) einen zungenförmig vorstehenden bogenförmigen Bereich auch.

Weiterentwicklungen des Schneideinsatzes sind in den Unteransprüchen beschrieben.

So ist die Schneidkante bogenförmig ausgebildet und besitzt vorzugsweise einen vorstehenden konvex gekrümmten Teil und einen sich hieran anschließenden konkav gekrümmten Teil, wobei z.B. der konvex gekrümmte Teil zum Schneiden des Einstiches bzw. Unterstiches bei Kurbelwellen dient und der konkav gekrümmte Teil den gewünschten radialen Übergang vom Stich zu der zu bearbeitenden Zylinderfläche schneidet. Es sind jedoch andere Schneidkantenprofile bis hin zu mehrzahnigen Schneidkantenprofilen im Sinn dieser Erfindung möglich.

Zu einer weiteren Schneidkantenstabilisierung ist vorzugsweise ein sich an einen Teilbereich der konvex gekrümmten Schneidkantenteil angrenzender Freiflächenbereich unter einem Freiwinkel von 0° angeordnet, wohingegen der sich hieran anschließende Teilflächenbereich konkav gekrümmt ist. Neben der Schneidkantenstabilisierung im vorderen Bereich dient die 0°-FreiflächenAusbildung auch als rückwärtige Anlagefläche des Schneideinsatzes im Plattensitz. Der negative Freiflächenbereich ist sowohl entlang des konvexen Schneidkantenabschnittes in der Breite als auch in seiner Höhe begrenzt, die vorzugsweise zwischen 0,2 mm bis 2 mm liegt.

Nach einer weiteren Ausgestaltung der Erfindung sind die Krümmungsradien der konkaven Freifläche mit Ausnahme der 0°-Freiflächenbereiche im gesamten durch die Schneidkantenform vorgegebenen Profilbereich so ausgestaltet, daß ihre Mittelpunkte auf einer gemeinsamen Vertikalachse (senkrecht zur verlängerten Auflagefläche des Schneideinsatzes angeordnet) liegen. Die Spanfläche kann als Spanflächenmulde, konvex, im Anschluß an die Schneidkante eben mit positiven, negativen oder einem 0°-Spanwinkel ausgebildet sein. Wird die Form einer Spanflächenmulde gewählt, liegt der in Richtung der Längsachse gemessene Spanwinkel der Spanflächenmulde entlang der gesamten Schneidkante zwischen 0° und 30°, vorzugsweise bei 20°. Hierdurch ergeben sich mit Ausnahme des Schneidkantenbereiches, an den der 0°-Freiflächenbereich anschließt, scharfe Schneidkanten mit einem relativ kleinen Keilwinkel.

Nach einer weiteren Ausgestaltung der Erfindung ist die Schneidkante wellenförmig konturiert, wobei z.B. die Einhüllende der wellenförmigen Konturierung einen konvexen und einen konkav gekrümmten Teil aufweist. Diese Ausführungsform schließt auch mehrzahnige Profilschneidplatten in einseitiger oder doppelseitiger Ausführung, bei der die Ober- und die Unterseite zum Zerspanen nutzbar sind, mit ein. Die durch die wellenförmige Schneidkantenkonturierung gebildeten Zähne weisen vorzugsweise Flankenwinkel zwischen 5° und 25° auf. Auf diese Weise werden mehrere klein-radiale Haupt- und Nebenschneiden geschaffen, die beim Einstechen des Werkzeuges in das Werkstück hintereinander angeordnet sind und dazu führen, daß bei jedem weiteren Zahneingriff eine fortschreitende Glättung der geschnittenen Oberfläche herbeigeführt wird, die bei Ausfahren des Schneidwerkzeuges zu einer Schlichtbearbeitung fortgesetzt wird.

Nach einer weiteren Ausgestaltung der Erfindung besitzt der Schneideinsatz insgesamt acht nutzbare Schneidkanten, die so ausgebildet sind, daß bezüglich einer zu den beiden äußeren Grundflächen parallelen Schnittebene der Schneideinsatz spiegelsymmetrisch ausgebildet ist. Auf diese Art und Weise können die auf einer Seite des Schneideinsatzes angeordneten Schneidkanten für links angeordnete Unterstiche und die beiden anderen für rechts angeordnete Unterstiche, die jeweils zu schneiden sind, verwendet werden. Entsprechendes gilt für die gegenüberliegende Seite mit vier Schneiden.

Weiterhin ist es möglich, die Spanfläche mit konkaven und/oder konvexen Spanformelementen, d.h. Spanform-Nuten, Mulden und/oder Erhebungen, auszustatten, bei denen auf die nach dem Stand der Technik bekannten Ausführungsformen zurückgegriffen werden kann, wie z.B. Rippen oder längserstreckte Mulden, die neben der Spanabhebung noch eine Spanlenkung bewirken. Der Schneideinsatz besitzt je nach gewählter Spanneinrichtung entweder ein zur Aufnahme einer Befestigungsschraube geeignetes Loch oder beispielsweise eine Klemmulde zur Aufnahme eines Klemmarmes oder einer Spannpratze.

Ausführungsbeispiele der Erfindung sind in den Zeichnungen dargestellt. Es zeigen
- Fig. 1: eine perspektivische Ansicht eines erfindungsgemäßen Schneideinsatzes,
- Fig. 2: eine Draufsicht auf eine Seitenfläche des Schneideinsatzes nach Fig. 1,
- Fig. 3: eine Draufsicht auf die Grundfläche bzw. die beidseitigen Spanmulden des Schneideinsatzes nach Fig. 1,
- Fig. 4: eine vergrößerte perspektivische Ansicht auf eine Spanmulde und den angrenzenden Freiflächenbereich,
- Fig. 5: eine Draufsicht auf eine Spanfläche mit wellenförmiger Kontur,
- Fig. 6a bis d: Seitenansichten verschiedener Spanflächenformen,

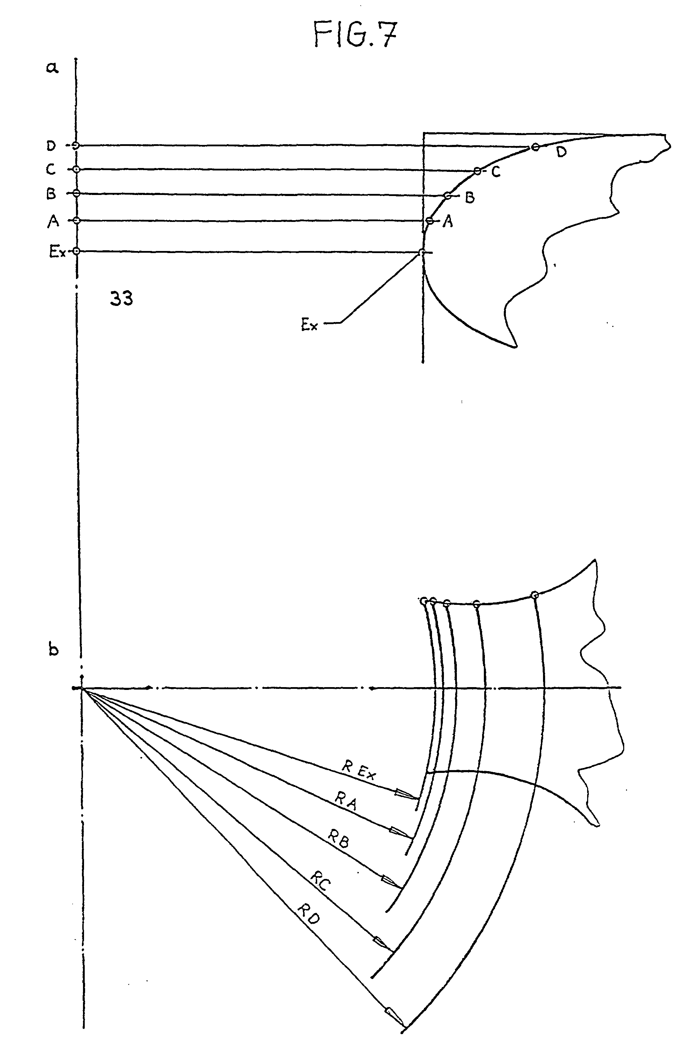

- Fig. 7a, b: schematische Darstellungen der Freiflächen-Krümmungsradien,
- Fig. 8: eine vergrößerte Einzelansicht eines Wellenberges (Zahnes) nach Fig. 5,
- Fig. 9: einen weiteren Schneideinsatz mit acht nutzbaren Schneidkanten und
- Fig. 10: einen Schneideinsatz nach Fig. 1 im Eingriffszustand.

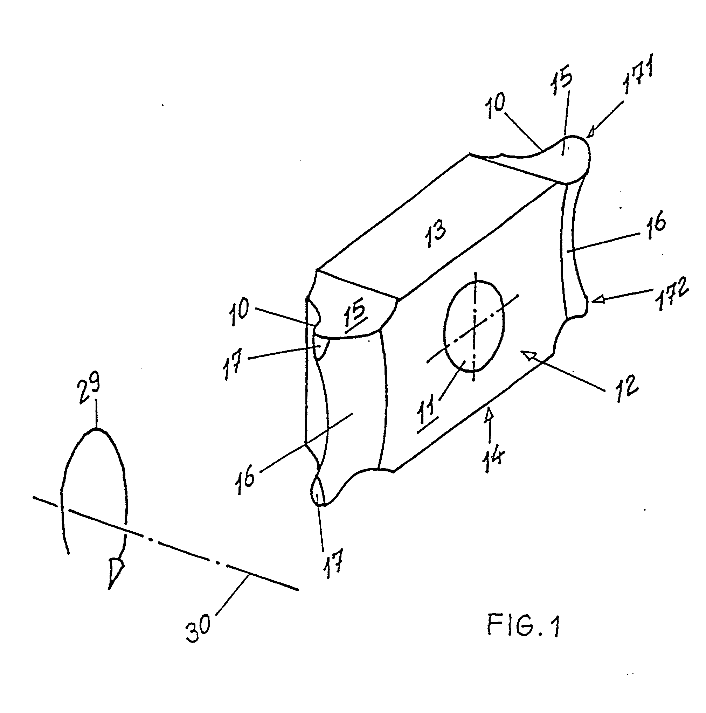

Wie aus den Fig. 1 bis 3 zu entnehmen, besitzt der Schneideinsatz eine im wesentlichen kubische Grundform mit mindestens zwei nutzbaren Schneidkanten 10, zwei parallel zueinander angeordneten ebenen und von einem Befestigungsloch 11 durchdrungenen Seitenflächen 12, zwei Grundflächen 13 und 14, die an ihren gegenüberliegenden Enden jeweils eine durch die genannten bogenförmigen Schneidkanten 10 begrenzte Spanfläche, hier eine Spanflächenmulde 15 aufweisen und zwei Freiflächen 16, die mit Ausnahme von Freiflächenbereichen 17 konkav ausgebildet ist.

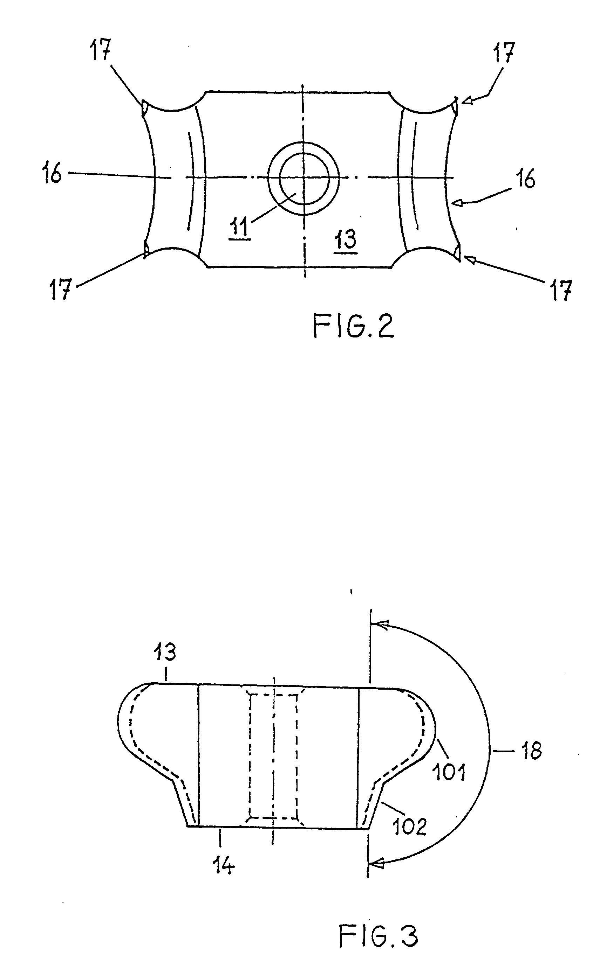

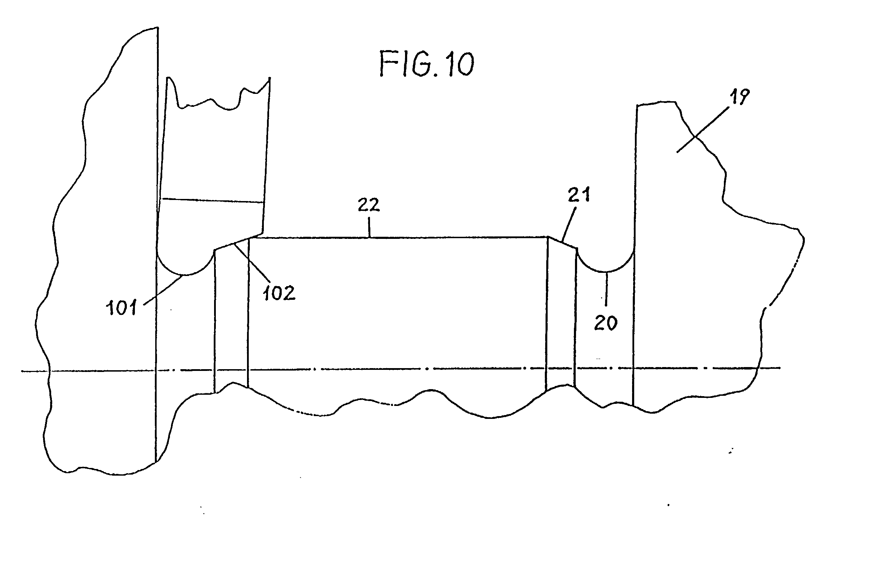

Fig. 3 und 10 sind jeweils der Profilbereich 18 beim Schneidwerkzeug bzw. beim zerspanenden Einsatz an einer Kurbelwelle 19 zu entnehmen, die (siehe Fig. 1) um eine Achse 30 in Richtung des Pfeiles (29) gedreht wird. Die Schneidkante besitzt einen konvexen zungenförmigen vorstehenden Bereich 101 sowie einen konkav und ggf. geradlinig auslaufenden Teil 102, die zusammen die Schneidkante bilden. Die Schneidkantenbereiche 101 dienen zum Einstechen von Unterstichen 20, wohingegen die konkaven bzw. geradlinigen Freiflächenbereiche 102 den Übergangsbereich 21 von dem Einstich zu einem zylinderförmigen Oberflächenstück 22 schneiden sollen.

Wesentliches kennzeichnendes Merkmal ist der konkave Verlauf der Freifläche 16, der in einer konkreten Ausführungsform derart ausgebildet ist, daß die Mittelpunkte der Radien R_{A}, R_{B}, R_{C} und R_{D} auf einer gemeinsamen Linie 33 liegen. Unterhalb eines Teiles der konkaven Schneidfläche 101 liegt ein Freiflächenbereich 17, der unter einem Freiwinkel von 0° angeordnet ist. Wie Fig. 1 im einzelnen zu entnehmen ist, werden durch die betreffenden hinteren Freiflächenbereiche 171 und 172 hintere Anlagefläche im Schneidplattensitz geschaffen, während die Fläche 14 als Auflagefläche dient. Der Spanwinkel α liegt zwischen 0° und 30°, vorzugsweise bei 20°, gemessen in Richtung der Längsachse 23 des Schneideinsatzes.

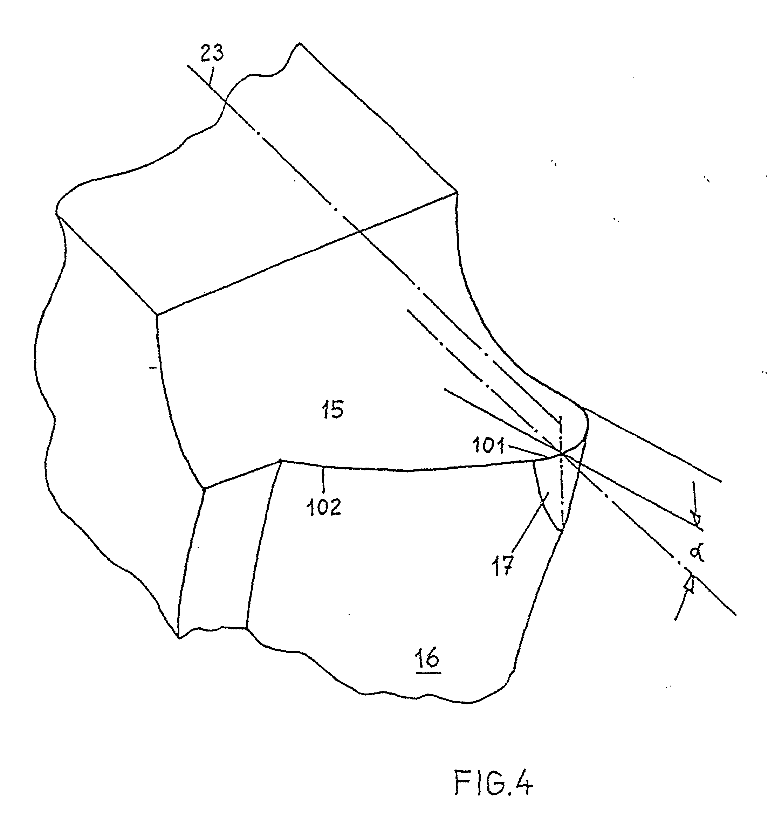

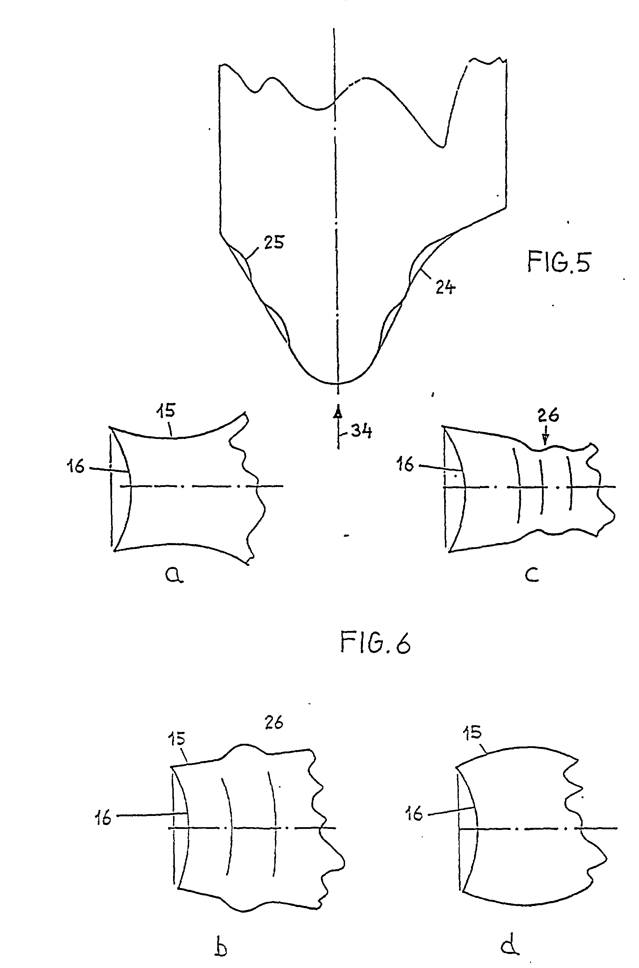

Anstelle der in Fig. 1 bis 4 entnehmbaren Schneidkante kann auch eine Schneidkante verwendet werden, deren Einhüllende 24 den konvexen bzw. konkaven Verlauf der Schneidkantenabschnitte 101 und 102 besitzt, jedoch ist die Schneidkante 25 wellenförmig ausgebildet (siehe Fig. 5). Die Schneidkante ist so ausgebildet, daß in Richtung des Pfeiles 34 gesehen jeder Punkt auf der Wellenlinie 25 sichtbar ist, d.h. keine Hinterschneidungen vorliegen. Die einzelnen Zähne besitzen vorzugsweise Flankenwinkel β zwischen 5° und 25°. Wie aus Fig. 6a bis d ersichtlich, kann die Spanfläche 15 konkav, konvex oder eben ausgebildet sein, wobei die Spanwinkel positiv, 0° oder negativ sein können. Fig. 6c und 6b zeigen Ausführungsformen mit Spanformelementen 26, nämlich einer Spanform(doppel)nut und einem erhabenen Spanformelement. Die Schneidkante 10 kann in einer zur Auflagefläche parallelen oder einer hierzu unter einem spitzen Winkel geneigten Ebene liegen, sie kann auch konvex, konkav und/oder wellenförmig (jeweils in einer Stirnansicht betrachtet) ausgebildet sein. Der bisher beschriebene Schneideinsatz besitzt vier nutzbare Schneidkanten 10.

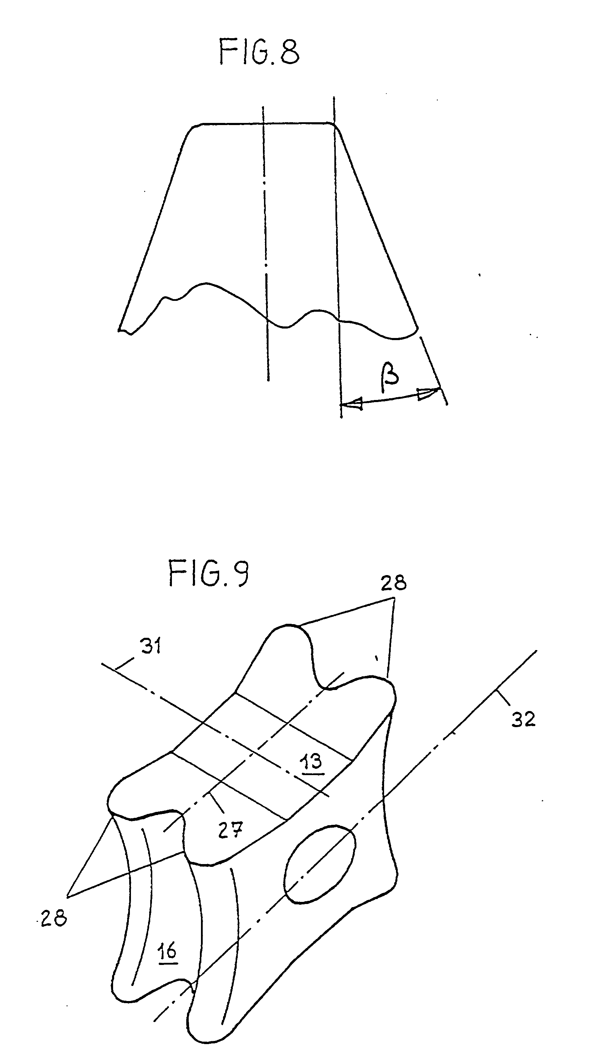

Nach einer weiteren Ausgestaltung der Erfindung ist, wie Fig. 8 entnehmbar, auch eine Verdoppelung der nutzbaren Schneidkanten dadurch möglich, daß der zuvor beschriebene Schneideinsatz an der kleineren Seitenfläche 27, die der Seitenfläche 12 gegenüberliegt, gespiegelt wird. hierdurch ergeben sich auf jeder Seite jeweils vier nutzbare Schneidkanten 28 mit dem zuvor beschriebenen Verlauf. Jeweils bezüglich der Achsen 27, 31 und 32 ist der Schneideinsatz spiegelsymmetrisch.

## Patentansprüche

1. Schneideinsatz zum Schneiden von Profilen, insbesondere zum Fräsen von Profileinstichen in rotierend bewegte Werkstücke wie Kurbelwellen (19) mit einem im wesentlichen kubischen Grundkörper mit mindestens zwei nutzbaren Schneidkanten (10), mit zwei parallel zueinander angeordneten, ebenen und von einem Befestigungsloch (11) durchdrungenen oder mit einer Ausbildung zur Aufnahme eines Klemmarmes versehenen Seitenflächen (12), zwei Grundflächen (13, 14), die an ihren gegenüberliegenden Enden jeweils eine durch dem zu schneidenden Profil entsprechend bogenförmig ausgebildete Schneidkanten (10) begrenzte Spanflächen (15) aufweisen, und zwei zwischen gegenüberliegenden Schneidkanten (10) liegende Freiflächen (16),
**dadurch gekennzeichnet,**
**daß** die Freifläche (16) zumindest teilweise kreisförmig konkav ausgebildet ist und daß die Schneidkante (10) einen zungenförmig vorstehenden Bereich (101) aufweist.

2. Schneideinsatz nach Anspruch 1, **dadurch gekennzeichnet, daß** die Schneidkante (10) bogenförmig ausgebildet ist, vorzugsweise einen vorstehenden konvex gekrümmten Teil (101) und einen sich hieran anschließenden konkav gekrümmten Teil (102) aufweist.

3. Schneideinsatz nach Anspruch 1 oder 2, **dadurch gekennzeichnet, daß** ein sich an einem Teilbereich der konvex gekrümmten Schneidkantenteil (101) angrenzender Flächenbereich (17) unter einem Freiwinkel von 0°angeordnet ist, und daß der sich hieran anschließende Freiflächenbereich (16) konkav gekrümmt ist.

4. Schneideinsatz nach einem der Ansprüche 1 bis 3, **dadurch gekennzeichnet, daß** die Krümmungsradien (R_{A}, R_{B}, R_{C}, R_{D}) der konkaven Freifläche (16) mit Ausnahme des 0°-Freiflächenbereiches (17) im gesamten durch die Schneidkantenform (101, 102) vorgegebenen Profilbereich Mittelpunkte haben, die auf einer gemeinsamen Achse (33) liegen.

5. Schneideinsatz nach einem der Ansprüche 1 bis 4, **dadurch gekennzeichnet, daß** der in Richtung der Längsachse (23) gemessene Spanwinkel (α) einer Spanflächenmulde (15) entlang der gesamten Schneidkante (10) zwischen 0° und 30°, vorzugsweise bei 20° liegt.

6. Schneideinsatz nach einem der Ansprüche 2 bis 5, **dadurch gekennzeichnet, daß** die Schneidkante wellenförmig konturiert ist, wobei die Einhüllende (24) der wellenförmigen Konturierung (25) einen konvexen (101) und einen konkav gekrümmten (102) Teil aufweist.

7. Schneideinsatz nach Anspruch 6, **dadurch gekennzeichnet, daß** die durch die wellenförmige Schneidkantenkonturierung gebildeten Zähne Flankenwinkel (β) zwischen 5° und 25° aufweisen.

8. Schneideinsatz nach einem der Ansprüche 1 bis 7, **gekennzeichnet durch** insgesamt acht nutzbare Schneidkanten bei einem zu einer zu den beiden äußeren Grundflächen (12) parallelen Schnittebene (27) spiegelsymmetrisch ausgebildeten Schneideinsatz.

## Claims

1. Cutting insert for cutting profiles, in particular for milling profiled grooves in rotating workpieces such as crank shafts (19) by means of a generally cubical base body having at least two usable cutting edges (10) and two parallel planar side faces (12) that are traversed by a mounting hole (11) or provided with a seat for engaging a clamping arm, two base faces (13, 14) that have on their opposite ends respective rake faces (15) bounded by arcuate cutting edges (10) shaped like the profile to be made, and two clearance faces (16) between the opposite cutting edges (10),
**characterized in that**
the clearance face (16) is at least partially circularly concave and that the cutting edge (10) has a tongue-shaped projecting region (101).

2. Cutting insert according to claim 1, **characterized in that** the cutting edge (10) is arcuate, preferably having a projecting convexly curved part (101) and an immediately adjacent concavely curved part (102).

3. Cutting insert according to claim 1 or 2, **characterized in that** the face region (17) immediately adjacent to a part region of the convexly curved cutting edge part (101) extends at a clearance angle of 0° and that the adjacent clearance-face region (16) is concavely curved.

4. Cutting insert according to one of claims 1 to 3, **characterized in that** the radii of curvature (R_{A}, R_{B}, R_{C}, R_{D}) of the concave clearance face with exception of the 0°-clearance-face region (17) have centers in set profile regions generally through the cutting-edge parts (101, 102) that lie on a common line (33).

5. Cutting insert according to one of claims 1 to 4, **characterized in that**, measured parallel to a longitudinal axis (23), the rake angle (α) of one of the rake-face recesses (15) is along the entire cutting edge (10) between 0° and 30°, preferably 20°.

6. Cutting insert according to claims 2 to 5, **characterized in that** the cutting edge is of wavy shape, wherein an envelope (24) of the wavy contour has convexly (101) and concavely (102) curved parts.

7. Cutting insert according to claim 6, **characterized in that** the teeth formed by the wavy cutting-edge shape have flank angles (β) between 5° and 25°.

8. Cutting insert according to one of claims 1 to 7, **characterized by** overall eight usable cutting edges in a cutting insert formed mirror symmetrical to a sectional plane (27) parallel to one of the two outer base faces (12).

## Revendications

1. Insert de coupe destiné à couper des profils, en particulier à fraiser des encoches de profil dans des pièces en mouvement rotatif, telles que vilebrequins (19), avec un corps de base pour l'essentiel cubique avec au moins deux tranchants utilisables (10), avec deux surfaces latérales (12) disposées parallèlement l'une à l'autre, planes et traversées d'un trou de fixation (11) ou pourvues d'une formation destinée à recevoir un bras de serrage, avec deux surfaces de base (13, 14) qui, à leurs extrémités opposées, présentent respectivement une face de coupe (15) limitée par des tranchants (10) réalisés en arc conformément au profil à couper, et avec deux faces de dépouille (16) situées entre des tranchants opposés (10),
**caractérisé par le fait**
**que** la face de dépouille (16) est réalisée au moins en partie de façon circulaire concave et que le tranchant (10) présente une zone (101) qui fait saillie en forme de langue.

2. Insert de coupe selon la revendication 1, **caractérisé par le fait que** le tranchant (10) est réalisé en arc, qu'il présente de préférence une partie en saillie (101) courbée de façon convexe et une partie (102) courbée de façon concave contiguë à cette première.

3. Insert de coupe selon la revendication 1 ou 2, **caractérisé par le fait qu'**une zone de surface (17) qui est contiguë à une zone partielle de la partie de tranchant (101) courbée de façon convexe est disposée sous un angle de dépouille de 0°, et que la zone de face de dépouille (16) y contiguë est courbée de façon concave.

4. Insert de coupe selon l'une des revendications 1 à 3, **caractérisé par le fait que** les rayons de courbure (R_{A}, R_{B}, R_{C}, R_{D}) de la face de dépouille concave (16), à l'exception de la zone de face de dépouille à 0° (17), ont dans l'ensemble de la zone de profil donnée par la forme de tranchant (101, 102) des points centraux qui sont situés sur un axe commun (33)

5. Insert de coupe selon l'une des revendications 1 à 4, **caractérisé par le fait que** l'angle de coupe (α) d'un creux de face de coupe (15), qui est mesuré dans la direction de l'axe longitudinal (23), est, le long de l'ensemble du tranchant (10), compris entre 0° et 30°, de préférence il est de 20°.

6. Insert de coupe selon l'une des revendications 2 à 5, **caractérisé par le fait que** le tranchant présente un contour ondulé, l'enveloppante (24) du contour ondulé présentant une partie convexe (101) et une partie (102) courbée de façon concave.

7. Insert de coupe selon la revendication 6, **caractérisé par le fait que** les dents formées par le contour ondulé du tranchant présentent des angles de flanc (β) compris entre 5° et 25°.

8. Insert de coupe selon l'une des revendications 1 à 7, **caractérisé par**, dans l'ensemble, huit tranchants utilisables dans un insert de coupe réalisé à symétrie spéculaire par rapport à un plan de coupe (27) parallèle aux deux surfaces de base extérieures (12).
